# EUROPEAN PATENT APPLICATION

(11) **EP 4 697 267 A1**
(43) Date of publication of application: **18.02.2026**
(21) Application number: 24788729.2
(22) Date of filing: 09.04.2024
(51) Int. Cl.: G06T 7/60, G06V 10/70

(54) **IMAGE PROCESSING DEVICE, IMAGE PROCESSING METHOD, AND PROGRAM**

(30) Priority: 14.04.2023 JP 2023066531
(71) Applicant: Resonac Corporation, Tokyo 105-7325 (JP)
(72) Inventor: OKANO, Yu, Tokyo 105-7325 (JP)
(74) Representative: Strehl & Partner mbB
(86) International application number: PCT/JP2024/014430
(87) International publication number: WO 2024/214705

(57) **Abstract**

An image processing apparatus includes an image acquiring unit that acquires a target image indicating a target position specified by a user; a contour line predicting unit that predicts a contour line near the target position based on a learned model that has learned a relationship between a position in an image and a contour line near the position; and an image output unit that outputs a training image indicating a prediction result of the contour line near the target position.

## Description

### TECHNICAL FIELD

The present disclosure relates to an image processing apparatus, an image processing method, and a program.

### BACKGROUND ART

Techniques for analyzing images by using machine learning models are known. In order to analyze images with high accuracy by using machine learning models, a large number of highly accurate training images are required.

For example, Patent Document 1 discloses a training data creation support method for creating training data to be used in constructing a learning model for performing image processing by using machine learning.

### CITATION LIST

### PATENT DOCUMENT

Patent document 1: Japanese Unexamined Patent Application Publication No. 2020-126414

### SUMMARY OF INVENTION

### TECHNICAL PROBLEM

However, in the conventional technology, when creating a training image, there are many manual operations performed by a human, which require a large amount of labor and time. Although there are annotation tools that automatically create a training image with respect to an input image, these annotation tools cannot handle an image with a complicated contour line shape.

An object of one aspect of the present disclosure is to efficiently create a training image for use in machine learning.

### SOLUTION TO PROBLEM

The present disclosure has the following configurations.
[1] An image processing apparatus including:
   an image acquiring unit configured to acquire a target image indicating a target position specified by a user;
   a contour line predicting unit configured to predict a contour line near the target position based on a learned model that has learned a relationship between a position in an image and a contour line near the position; and
   an image output unit configured to output a training image indicating a prediction result of the contour line near the target position.
[2] The image processing apparatus according to [1], wherein the image processing apparatus repeatedly executes:
   acquiring, by the image acquiring unit, the target image in which a new target position is indicated; and
   predicting, by the contour line predicting unit, the contour line near the new target position.
[3] The image processing apparatus according to [1] or [2], wherein the learned model has learned a relationship between a region indicating a predetermined luminance and the contour line near the region, based on learning data including a learning image in which the region is drawn and a ground truth image in which the contour line near the region included in the learning image is indicated.
[4] The image processing apparatus according to [3], wherein the region is drawn at a position randomly selected from the contour line included in the learning image.
[5] The image processing apparatus according to [3] or [4], wherein the learning data includes the learning image obtained by extracting a part of a basic image including a contour line, and the ground truth image obtained by extracting a part of a contour line image indicating the contour line included in the basic image.
[6] An image processing method in which a computer executes:
   a procedure for acquiring a target image indicating a target position specified by a user;
   a procedure for predicting a contour line near the target position based on a learned model that has learned a relationship between a position in an image and a contour line near the position; and
   a procedure for outputting a training image indicating a prediction result of the contour line near the target position.
[7] A program that causes a computer to execute:
   a procedure for acquiring a target image indicating a target position specified by a user;
   a procedure for predicting a contour line near the target position based on a learned model that has learned a relationship between a position in an image and a contour line near the position; and
   a procedure for outputting a training image indicating a prediction result of the contour line near the target position.

### ADVANTAGEOUS EFFECTS OF INVENTION

According to one aspect of the present disclosure, it is possible to efficiently create a training image for use in machine learning.

### BRIEF DESCRIPTION OF DRAWINGS

[FIG. 1] FIG. 1 is a diagram illustrating an example of a target image.
[FIG. 2] FIG. 2 is a diagram illustrating an example of a training image.
[FIG. 3] FIG. 3 is a diagram illustrating an example of a contour line image.
[FIG. 4] FIG. 4 is a block diagram illustrating an example of an overall configuration of a training image creation support system.
[FIG. 5] FIG. 5 is a block diagram illustrating an example of a hardware configuration of a computer.
[FIG. 6] FIG. 6 is a block diagram illustrating an example of a functional configuration of a training image creation support system.
[FIG. 7] FIG. 7 is a flowchart illustrating an example of a training image creation support method.
[FIG. 8] FIG. 8 is a flowchart illustrating an example of a learning data generation process.
[FIG. 9] FIG. 9 is a flowchart illustrating an example of a learning image.
[FIG. 10] FIG. 10 illustrates an example of a ground truth image.
[FIG. 11] FIG. 11 illustrates an example of a learning image showing a learning position.
[FIG. 12] FIG. 12 illustrates an example of a ground truth image from which a ground truth contour line is extracted.
[FIG. 13] FIG. 13 is a flowchart illustrating an example of model learning processing.
[FIG. 14] FIG. 14 is a sequence diagram illustrating an example of training image generation processing.
[FIG. 15] FIG. 15 illustrates an example of a verification image.
[FIG. 16] FIG. 16 illustrates an example of a contour line image.
[FIG. 17] FIG. 17 illustrates an example of a prediction result.

### DESCRIPTION OF EMBODIMENTS

Each embodiment of the present disclosure will now be described with reference to the accompanying drawings. In the present specification and the drawings, components having substantially the same functional configuration are denoted by the same reference numerals, thereby omitting redundant explanation.

### [Embodiment]

An embodiment of the present disclosure is a training image creation support system that supports creation of a training image for use in machine learning. The training image in the present embodiment is used to learn a machine learning model for analyzing an image. The training image in the present embodiment is an image in which a ground truth contour line is illustrated in an image to be analyzed. The training image in the present embodiment can be used to learn a machine learning model for performing tasks such as edge detection, semantic segmentation, and instance segmentation.

Hereinafter, an image to be analyzed is also referred to as a "target image". The target image in the present embodiment is an image in which a contour line of a complex shape is captured. As an example, the target image may be an image in which a state in which a large number of particles are dispersed is captured. As another example, the target image may be an image in which a surface of a metal deposit is captured.

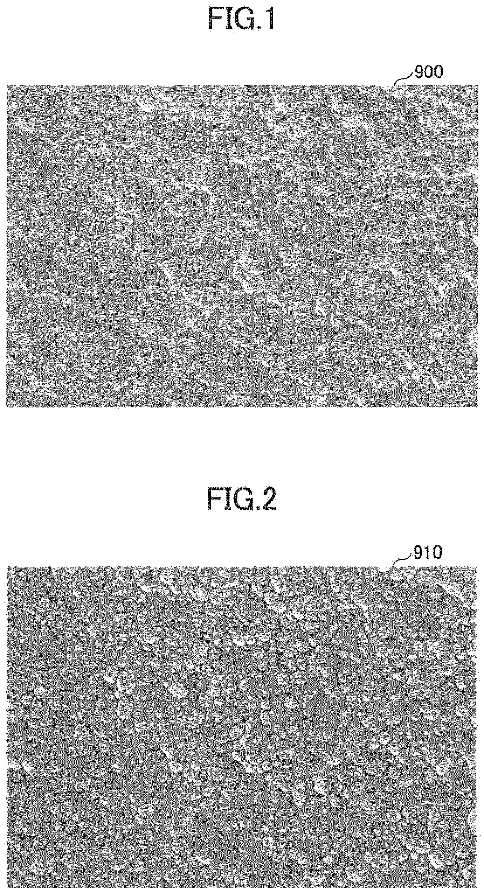

FIG. 1 is a diagram illustrating an example of the target image in the present embodiment. The target image 900 illustrated in FIG. 1 is an image in which a surface of a metal deposit is captured. As illustrated in FIG. 1, a large number of contour lines having complicated shapes are captured in a target image 900.

Note that the target image 900 illustrated in FIG. 1 is an image captured by a scanning electron microscope (SEM). The target image in the present embodiment may be captured by, for example, an optical microscope, a transmission electron microscope (TEM), or the like according to the characteristics of an object as a subject, the purpose of image analysis, and the like.

FIG. 2 is a diagram illustrating an example of a training image in the present embodiment. A training image 910 illustrated in FIG. 2 is an image in which a contour line is drawn on the target image illustrated in FIG. 1. In FIG. 2, a region corresponding to the contour line is drawn with a thick line having a luminance different from the luminance of each pixel in the target image 900.

Conventionally, the creation of a training image has been performed manually by a human by using a computer. In order to draw a contour line having a complicated shape as in the target image 900 illustrated in FIG. 1, it is difficult to use a general input device such as a mouse or keyboard, and an input device specialized in image editing such as a pen tablet is often used.

When manually drawing a contour line of a complicated shape as illustrated in FIG. 2, it may take several hours per image, for example, depending on the complexity of the image. Learning a machine learning model based on deep learning requires, for example, several hundred training images. Therefore, learning a machine learning model with high accuracy requires a large amount of labor and time.

In creating a training image, it is not necessary to simply draw all the contour lines captured in the image, but it is necessary to select and draw necessary contour lines according to the purpose of image analysis. Therefore, it is difficult to create a general-purpose annotation tool that can handle any image and any analysis target.

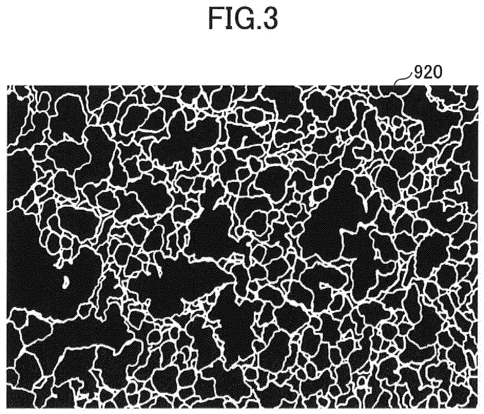

FIG. 3 illustrates an example of a contour line image. The contour line image is an image obtained by extracting only the contour lines drawn in the training image. In a contour line image 920 illustrated in FIG. 3, only the contour lines to be analyzed among the contour lines included in the target image 900 illustrated in FIG. 1 are selected and drawn. In FIG. 3, a region corresponding to the contour lines is drawn in white, and the other regions are drawn in black. As illustrated in FIG. 3, in the contour line image 920, fine contour lines among the contour lines included in the target image 900 are omitted.

The purpose of the training image creation support system in the present embodiment is to efficiently create a training image for use in machine learning. In one aspect, according to the present embodiment, it is possible to reduce labor and time for creating a training image.

### <Overall configuration of training image creation support system>

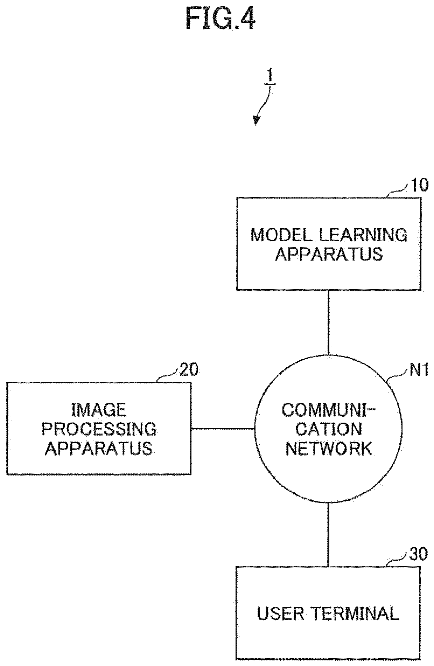

The overall configuration of the training image creation support system in the present embodiment will be described with reference to FIG. 4. FIG. 4 is a block diagram illustrating an example of the overall configuration of the training image creation support system in the present embodiment.

As illustrated in FIG. 4, a training image creation support system 1 in the present embodiment includes a model learning apparatus 10, an image processing apparatus 20, and a user terminal 30. The model learning apparatus 10, the image processing apparatus 20, and the user terminal 30 are connected to each other for data communication via a communication network N1 such as a LAN (Local Area Network) or the Internet.

The model learning apparatus 10 is an information processing apparatus such as a personal computer, a workstation, or a server for learning a machine learning model (hereinafter, also referred to as "prediction model") for predicting a contour line included in an image. The model learning apparatus 10 learns a prediction model based on a training image created in advance. The model learning apparatus 10 transmits the learned prediction model to the image processing apparatus 20.

The image processing apparatus 20 is an information processing apparatus such as a personal computer, a workstation, or a server for generating a training image based on the learned prediction model. The image processing apparatus 20 receives a target image from the user terminal 30. The target image shows a position (hereinafter also referred to as "target position") specified by the user. The image processing apparatus 20 predicts a contour line near the target position from the received target image, and transmits a training image showing the prediction result to the user terminal 30.

The user terminal 30 is an information processing terminal such as a personal computer, a tablet terminal, or a smartphone operated by the user. The user terminal 30 receives the specification of the target position by the user, and transmits the target image showing the target position to the image processing apparatus 20. The user terminal 30 receives the training image showing the prediction result of the contour line from the image processing apparatus 20, and outputs the image to the user.

The user of the training image creation support system 1 inputs the target image to the user terminal 30, and performs an operation for specifying the target position where the contour line is desired to be drawn. The user terminal 30 outputs the training image showing the prediction result of the contour line near the position specified by the user to the user. The user may further perform an operation for specifying the target position on the output training image. The user may also perform an operation to edit the contour lines shown in the training image. The user can create a desired training image only by performing an operation to select a target image in the target images.

The overall configuration of the training image creation support system 1 illustrated in FIG. 4 is only an example, and various system configuration examples may be available depending on the use and purpose. For example, the training image creation support system 1 may include a plurality of one or more of the model learning apparatus 10, the image processing apparatus 20, and the user terminal 30. For example, the model learning apparatus 10 or the image processing apparatus 20 may be implemented by a plurality of computers, or may be implemented as a cloud computing service. The division of apparatuses such as the model learning apparatus 10, the image processing apparatus 20, and the user terminal 30 illustrated in FIG. 4 is an example.

### <Hardware configuration of the training image creation support system>

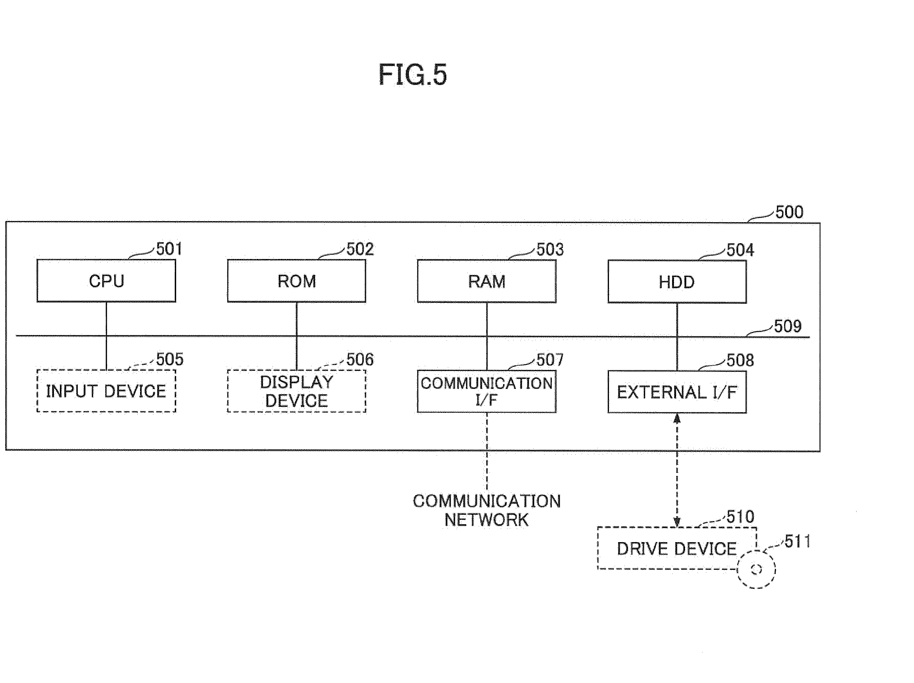

The hardware configuration of the training image creation support system 1 according to the present embodiment will be described with reference to FIG. 5.

### <<Hardware configuration of computer>>

The model learning apparatus 10, the image processing apparatus 20, and the user terminal 30 in the present embodiment are implemented by, for example, a computer. FIG. 5 is a block diagram illustrating an example of the hardware configuration of the computer 500 in the present embodiment.

As illustrated in FIG. 5, the computer 500 includes a CPU (Central Processing Unit) 501, a ROM (Read Only Memory) 502, a RAM (Random Access Memory) 503, an HDD (Hard Disk Drive) 504, an input device 505, a display device 506, a communication I/F (Interface) 507, and an external I/F 508. The CPU 501, the ROM 502, and the RAM 503 form what is referred to as a computer. The respective hardware pieces of the computer 500 are connected to each other via a bus line 509. The input device 505 and the display device 506 may be connected to an external I/F 508 for use.

The CPU 501 is an arithmetic unit that reads programs and data from a storage device such as the ROM 502 or the HDD 504 into the RAM 503 and executes processing, thereby implementing control and functions of the entire computer 500.

The ROM 502 is an example of a nonvolatile semiconductor memory (storage device) that can hold programs and data even when the power is turned off. The ROM 502 functions as a main storage device that stores various kinds of programs and data necessary for the CPU 501 to execute various programs installed in the HDD 504. More specifically, the ROM 502 stores boot programs such as the BIOS (Basic Input/Output System) and the EFI (Extensible Firmware Interface) that are executed when the computer 500 is started, as well as data such as OS (Operating System) settings and network settings.

The RAM 503 is an example of a volatile semiconductor memory (storage device) that erases programs and data when the power is turned off. The RAM 503 is, for example, a DRAM (Dynamic Random Access Memory) or an SRAM (Static Random Access Memory). The RAM 503 provides a work area that is developed when various programs installed in the HDD 504 are executed by the CPU 501.

The HDD 504 is an example of a nonvolatile storage device that stores programs and data. Programs and data stored in the HDD 504 include an OS, which is basic software that controls the entire computer 500, and applications that provide various functions on the OS. In place of the HDD 504, the computer 500 may use a storage device (e.g., SSD: Solid State Drive) that uses a flash memory as a storage medium.

The input device 505 is a touch panel used by a user to input various signals, operation keys and buttons, a keyboard and a mouse, a microphone for inputting sound data such as voice, or the like.

The display device 506 includes a display such as a liquid crystal display or an organic EL (Electro-Luminescence) display for displaying a screen, and a speaker for outputting sound data such as voice, or the like.

The communication I/F 507 is an interface for connecting to a communication network and allowing the computer 500 to perform data communication.

The external I/F 508 is an interface with an external device. The external device includes a drive device 510 and the like.

The drive device 510 is a device for setting the recording medium 511. The recording medium 511 includes a medium for recording information optically, electrically, or magnetically, such as a CD-ROM, a flexible disk, a magneto-optical disk, and the like. The recording medium 511 may also include a semiconductor memory for electrically recording information, such as a ROM, a flash memory, and the like. Thus, the computer 500 can read and/or write to the recording medium 511 via the external I/F 508.

The various programs installed in the HDD 504 are installed, for example, when the distributed recording medium 511 is set in the drive device 510 connected to the external I/F 508, and the various programs recorded in the recording medium 511 are read out by the drive device 510 and installed. Alternatively, the various programs installed in the HDD 504 may be installed by being downloaded from another network different from the communication network via the communication I/F 507.

### <Functional configuration of training image creation support system>

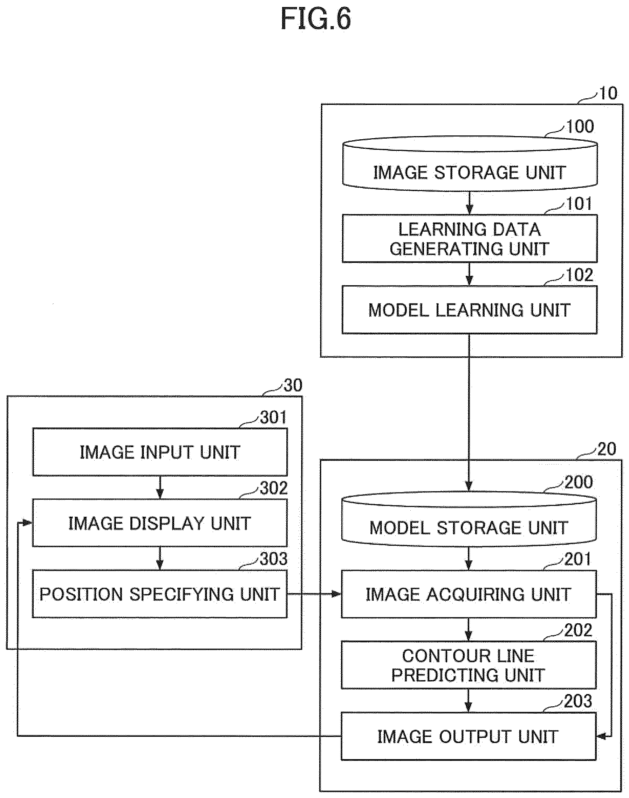

The functional configuration of a training image creation support system according to the present embodiment will be described with reference to FIG. 6. FIG. 6 is a block diagram illustrating an example of the functional configuration of the training image creation support system 1 according to the present embodiment.

### <<Functional configuration of model learning apparatus>>

As illustrated in FIG. 6, the model learning apparatus 10 according to the present embodiment includes an image storage unit 100, a learning data generating unit 101, and a model learning unit 102.

The image storage unit 100 is implemented by the HDD 504 illustrated in FIG. 5. The learning data generating unit 101 and the model learning unit 102 are implemented by a process in which a program loaded into the RAM 503 from the HDD 504 illustrated in FIG. 5 causes the CPU 501 to execute the process.

Image data used for learning the prediction model is stored in advance in the image storage unit 100. The image storage unit 100 may store one or more pieces of image data.

The image data includes a basic image and a contour line image. The basic image is an image obtained by capturing a contour line. The contour line image is an image showing the ground truth of the contour line included in the basic image. The image data can be generated from a training image created in advance. The basic image is an actual image from which the training image is created. The contour line image is an image obtained by extracting the region of the contour line from the training image.

The learning data generating unit 101 generates learning data for learning the prediction model based on the image data read from the image storage unit 100. The number of pieces of learning data will suffice as long as there is a sufficient number for learning the prediction model. The number sufficient for learning the prediction model can be determined based on the type of the prediction model and the type of the learning algorithm.

The learning data includes a learning image and a ground truth image from which ground truth contour lines are extracted. The learning image is an image in which a learning position is indicated on an image in which contour lines are captured. The learning position is a reference position for the prediction model to learn the relationship between a position in the image and a contour line. The ground truth image from which ground truth contour lines are extracted is an image in which a contour line near the learning position is indicated among contour lines included in the learning image.

The model learning unit 102 learns a prediction model based on the learning data generated by the learning data generating unit 101. The model learning unit 102 transmits the learned prediction model to the image processing apparatus 20.

As the structure of the prediction model in the present embodiment, for example, U-Net or various models derived from U-Net (for example, Nested U-Net, Attention U-Net, Swin U-Net, etc.) can be used.

### <<Functional configuration of image processing apparatus>>

As illustrated in FIG. 6, the image processing apparatus 20 in the present embodiment includes a model storage unit 200, an image acquiring unit 201, a contour line predicting unit 202, and an image output unit 203.

The model storage unit 200 is implemented by the HDD 504 illustrated in FIG. 5. The image acquiring unit 201, the contour line predicting unit 202, and the image output unit 203 are implemented by a process in which a program loaded into the RAM 503 from the HDD 504 illustrated in FIG. 5 causes the CPU 501 to execute the process.

The model storage unit 200 stores the learned prediction model. The learned prediction model is generated by the model learning apparatus 10 and transferred to the image processing apparatus 20.

The image acquiring unit 201 acquires a target image in which the target position is indicated. The image acquiring unit 201 may acquire the target image by receiving the target image from the user terminal 30. The image acquiring unit 201 may acquire the target image by receiving the input of the target image via the input device 505 or the external I/F 508 of the image processing apparatus 20.

The contour line predicting unit 202 predicts a contour line near the target position in the target image based on the learned prediction model read from the model storage unit 200. Specifically, the contour line predicting unit 202 inputs the target image showing the target position to the learned prediction model to acquire the prediction result of predicting a contour line near the target position output from the prediction model. The prediction result is two-dimensional data indicating the probability that each pixel of the target image is a contour line.

The image output unit 203 generates a training image by indicating the prediction result obtained by the contour line predicting unit 202 with respect to the target image. The image output unit 203 transmits the training image to the user terminal 30.

### <<Functional configuration of user terminal>>

As illustrated in FIG. 6, the user terminal 30 in the present embodiment includes an image input unit 301, an image display unit 302, and a position specifying unit 303.

The image input unit 301, the image display unit 302, and the position specifying unit 303 are implemented by a process in which a program loaded into the RAM 503 from the HDD 504 illustrated in FIG. 5 causes the CPU 501 to execute the process.

The image input unit 301 receives the input of a target image in response to the user's operation. The image input unit 301 sends the input target image to the image display unit 302.

The image display unit 302 displays the target image on the display device 506. When the image display unit 302 receives the target image from the image input unit 301, the image display unit 302 displays the target image on the display device 506. When the image display unit 302 receives the training image from the image processing apparatus 20, the image display unit 302 displays the training image on the display device 506 as a new target image.

The position specifying unit 303 receives the specification of the target position for the target image displayed by the image display unit 302 in response to the user's operation. The position specifying unit 303 indicates the received target position on the target image, and sends the target image with the target position indicated to the image processing apparatus 20.

### <Processing procedure of training image creation support system>

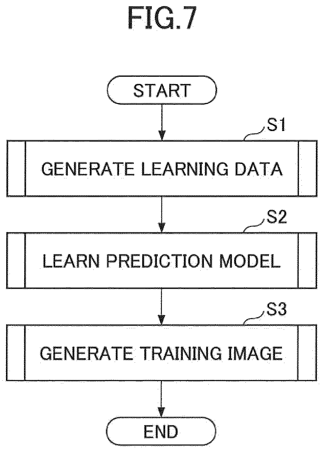

The processing procedure of the training image creation support method executed by the training image creation support system 1 according to the present embodiment will be described with reference to FIGS. 7 to 14. FIG. 7 is a flowchart illustrating an example of the processing procedure of the training image creation support method.

In step S1, the model learning apparatus 10 executes a learning data generation process. The learning data generation process is a process of generating learning data for learning a prediction model.

In step S2, the model learning apparatus 10 executes a model learning process. The model learning process is a process of learning a prediction model by using the learning data generated in step S1.

In step S3, the image processing apparatus 20 executes a training image generation process. The training image generation process generates a training image by using the learned prediction model learned in step S2.

### <<Learning data generation process>>

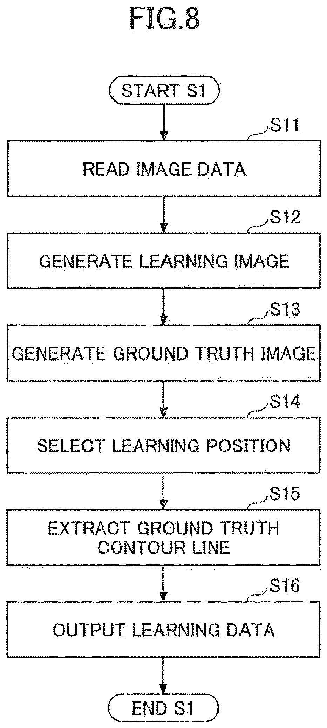

The learning data generation process (step S1 in FIG. 7) in the present embodiment will be described in more detail with reference to FIG. 8. FIG. 8 is a flowchart illustrating an example of the learning data generation process.

In step S11, the learning data generating unit 101 of the model learning apparatus 10 reads the image data stored in the image storage unit 100. The learning data generating unit 101 may read all the image data stored in the image storage unit 100. The learning data generating unit 101 may read one piece of image data arbitrarily selected from the image data stored in the image storage unit 100.

In step S12, the learning data generating unit 101 of the model learning apparatus 10 generates a learning image based on the image data read in step S11. The learning data generating unit 101 may generate a basic image itself included in the image data as a learning image. The learning data generating unit 101 may generate a plurality of learning images by randomly extracting an image of a predetermined size from one basic image.

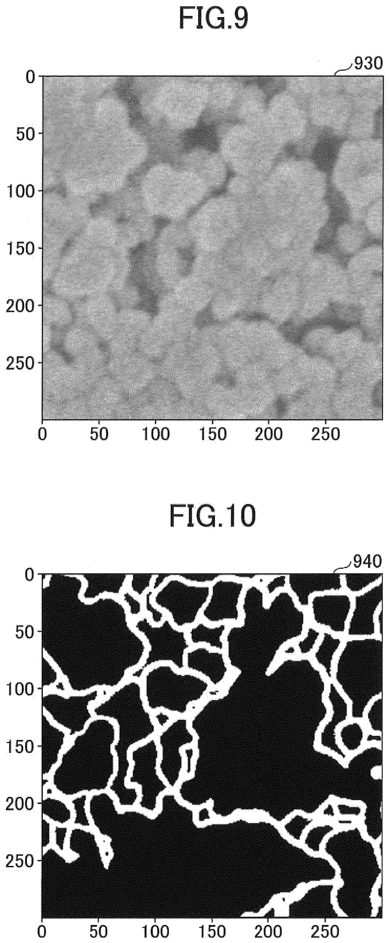

FIG. 9 is a diagram illustrating an example of a learning image. A learning image 930 illustrated in FIG. 9 is an image obtained by extracting a part of the target image 900 illustrated in FIG. 1. As illustrated in FIG. 9, a contour line of a complicated shape is captured in the learning image 930.

When the size of an image to be analyzed is large, if a prediction model is learned by using the entire image, the amount of calculation at the time of learning may become enormous. By learning the prediction model by using an image obtained by extracting a part of an image having a large size, the amount of calculation at the time of learning can be reduced.

Referring back to FIG. 8, a description will be given. In step S13, the learning data generating unit 101 of the model learning apparatus 10 generates a ground truth image based on the image data read in step S11. The learning data generating unit 101 generates a ground truth image by extracting, from the contour line image, a region corresponding to the learning image generated in step S12.

When the basic image itself is used as the learning image, the learning data generating unit 101 may generate the contour line image itself as the ground truth image. When the learning data generating unit 101 extracts a plurality of learning images from one basic image, the learning data generating unit 101 may generate a plurality of ground truth images by extracting a region corresponding to each learning image from the contour line image.

In order to create a training image used for learning a prediction model, it is necessary to draw a contour line manually. It takes a large amount of labor and time to manually draw a contour line of a complicated shape. If a plurality of pieces of learning data can be generated from one image data, the number of training images to be prepared in advance can be reduced, and the prediction model can be learned efficiently as a whole.

FIG. 10 is a diagram illustrating an example of a ground truth image. A ground truth image 940 illustrated in FIG. 10 is an image obtained by extracting the same region as the learning image 930 from the contour line image 920 illustrated in FIG. 3. As illustrated in FIG. 10, the ground truth image 940 indicates a contour line included in the learning image 930.

Referring back to FIG. 8, a description will be given. In step S14, the learning data generating unit 101 of the model learning apparatus 10 sets a learning position in the learning image generated in step S12. The learning position is selected from the contour line shown in the ground truth image generated in step S13.

For example, the learning data generating unit 101 may select a learning position at random from the contour lines shown in the ground truth image. For example, the learning data generating unit 101 may select a learning position from the contour lines shown in the ground truth image according to a predetermined rule.

For example, the learning data generating unit 101 may indicate the learning position in the learning image by drawing a region indicating a predetermined luminance at the learning position. For example, the learning data generating unit 101 may indicate the learning position in the learning image by generating two-dimensional data indicating a truth value indicating whether or not each pixel of the learning image is at the learning position.

The luminance used to draw the learning position is a luminance different from the luminance included in the image. When the luminance that can be included in the image is limited, a luminance different from the luminance may be predetermined. When the luminance that can be included in the image is uncertain, a range of luminance levels included in the learning image may be acquired, and a luminance not included in the range may be dynamically determined.

The number of learning positions may be specified by the user or may be predetermined. The learning data generating unit 101 may select a number of learning positions specified by the user. The learning data generating unit 101 may select a predetermined number of learning positions.

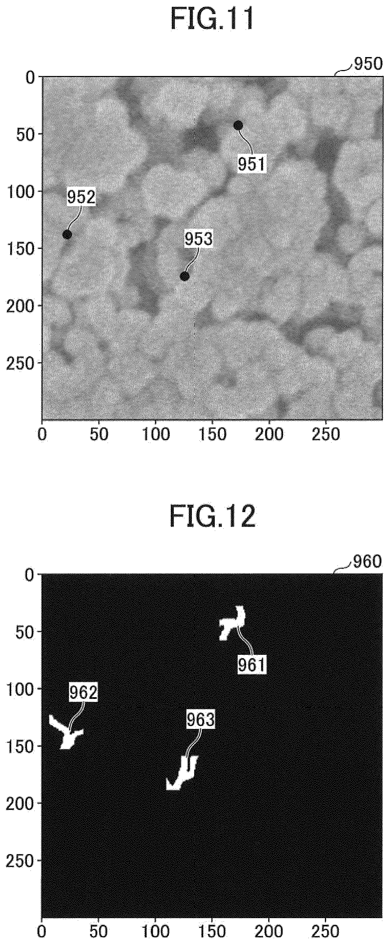

FIG. 11 is a diagram illustrating an example of a learning image provided with learning positions. A learning image 950 illustrated in FIG. 11 is an image obtained by setting three learning positions 951 to 953 on the learning image 930 illustrated in FIG. 9.

Referring back to FIG. 8, a description will be given. In step S15, the learning data generating unit 101 of the model learning apparatus 10 extracts a ground truth contour line from the ground truth image generated in step S13. The ground truth contour line is a contour line near the learning position selected in step S14.

The range of the "near" may be specified by the user or may be predetermined. That is, the learning data generating unit 101 may receive the user's specification of the distance and extract a contour line existing in the range of the distance specified with the learning position as the center. The learning data generating unit 101 may predetermine a distance defining the range of "near" and extract a contour line existing in the range of the distance predetermined with the learning position as the center.

FIG. 12 is a diagram illustrating an example of a ground truth image from which a ground truth contour line is extracted. The ground truth image 960 illustrated in FIG. 12 is an image obtained by extracting ground truth contour lines 961 to 963 near the learning positions 951 to 953 from the contour lines shown in the ground truth image 940 illustrated in FIG. 10.

Referring back to FIG. 8, a description will be given. In step S16, the learning data generating unit 101 of the model learning apparatus 10 outputs learning data. The learning data includes the learning image in which the learning position is indicated in step S14 and the ground truth image from which the ground truth contour line is extracted in step S15.

<<Model learning process>>

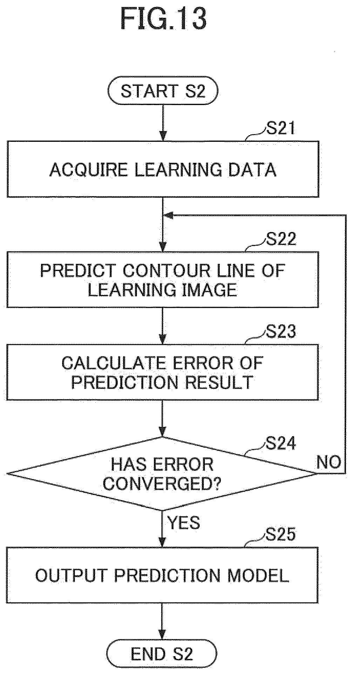

The model learning process (step S2 in FIG. 7) in the present embodiment will be described in more detail with reference to FIG. 13. FIG. 13 is a flowchart illustrating an example of the model learning process.

In step S21, the model learning unit 102 of the model learning apparatus 10 receives the learning data output by the learning data generating unit 101. Next, the model learning unit 102 selects a learning image to be used for learning from the received learning data.

In step S22, the model learning unit 102 of the model learning apparatus 10 inputs the learning image selected in step S21 to the prediction model. The prediction model predicts a contour line near the learning position indicated in the learning image, and outputs an image showing the prediction result.

In step S23, the model learning unit 102 of the model learning apparatus 10 calculates an error between the ground truth image corresponding to the learning image selected in step S21 and the prediction result predicted in step S22. As the error, for example, L1 loss or cross entropy error may be used. Then, the model learning unit 102 updates the parameters of the prediction model so as to minimize the error. The parameters may be updated according to a learning algorithm corresponding to the structure of the prediction model.

In step S24, the model learning unit 102 of the model learning apparatus 10 determines whether the error calculated in step S23 has converged (is sufficiently small). Whether the error has converged may be determined according to a learning algorithm corresponding to the type of the prediction model.

If the error has not converged (NO), the model learning unit 102 returns the process to step S22. Thereafter, the model learning unit 102 selects a different learning image and executes the processes from steps S22 to S24 again. If the error has converged (YES), the model learning unit 102 advances the process to step S25.

In step S25, the model learning unit 102 of the model learning apparatus 10 outputs the learned prediction model. The model learning apparatus 10 transmits the learned prediction model output by the model learning unit 102 to the image processing apparatus 20.

The image processing apparatus 20 receives the learned prediction model from the model learning apparatus 10. Next, the image processing apparatus 20 stores the received learned prediction model in the model storage unit 200.

### <<Training image generation processing>>

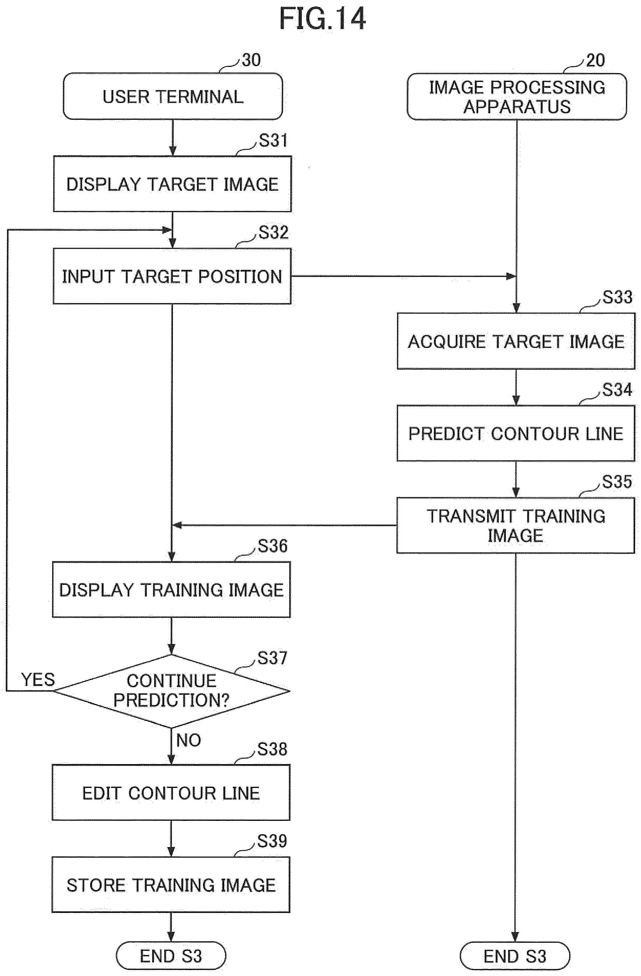

The training image generation processing (step S3 in FIG. 7) according to the present embodiment will be described in more detail with reference to FIG. 14. FIG. 14 is a sequence diagram illustrating an example of the training image generation processing.

In step S31, the image input unit 301 of the user terminal 30 receives the input of a target image in response to the user's operation. Next, the image input unit 301 sends the input target image to the image display unit 302. The image display unit 302 receives the target image from the image input unit 301. The image display unit 302 then displays the received target image on the display device 506.

In step S32, the user operates the input device 505 to specify a target position where the contour line is desired to be drawn in the target image displayed on the display device 506. The user may specify a plurality of target positions.

When specifying a new target position following the operation to continue the prediction of the contour line in step S37 described later, the target position is specified without the predicted contour line.

The position specifying unit 303 of the user terminal 30 receives the specification of the target position in response to the user's operation. Next, the position specifying unit 303 indicates the target position on the target image. Then, the position specifying unit 303 transmits the target image with the target position indicated to the image processing apparatus 20.

For example, the position specifying unit 303 may indicate the target position on the target image by drawing a region illustrating a predetermined luminance on the target position. Further, for example, the position specifying unit 303 may indicate the target position in the target image by associating, with the target image, two-dimensional data indicating truth values indicating whether or not each pixel of the target image is at the target position.

Further, the position specifying unit 303 may automatically indicate the target position in the target image based on the luminance of the pixel without depending on a user operation. In this case, the indicated target position may be selected according to a user operation.

In step S33, the image acquiring unit 201 of the image processing apparatus 20 receives the target image indicating the target position from the user terminal 30. Next, the image acquiring unit 201 sends the received target image to the contour line predicting unit 202 and the image output unit 203.

In step S34, the contour line predicting unit 202 of the image processing apparatus 20 receives the target image indicating the target position from the image acquiring unit 201. Next, the contour line predicting unit 202 reads the learned prediction model from the model storage unit 200.

Subsequently, the contour line predicting unit 202 inputs the target image showing the target position to the learned prediction model. The prediction model predicts a contour line near the target position in the target image and outputs an image showing the prediction result. Then, the contour line predicting unit 202 sends the prediction result to the image output unit 203.

In step S35, the image output unit 203 of the image processing apparatus 20 receives the target image from the image acquiring unit 201. Next, the image output unit 203 receives the prediction result of the contour line from the contour line predicting unit 202.

Next, the image output unit 203 generates a training image by indicating the prediction result of the contour line on the target image. Then, the image output unit 203 transmits the training image showing the prediction result of the contour line to the user terminal 30.

For example, the image output unit 203 may indicate the prediction result on the target image by drawing the contour line shown in the prediction result on the target image. For example, the image output unit 203 may indicate the prediction result on the target image by associating, with the target image, two-dimensional data indicating truth values indicating whether or not each pixel of the target image is a contour line.

The luminance for drawing the contour line is different from the luminance included in the image. The luminance for drawing the contour line is different from the luminance for
drawing the learning position. The luminance for drawing the contour line may be predetermined or dynamically determined according to the range of luminance included in the target image.

In step S36, the image display unit 302 of the user terminal 30 receives the training image from the image processing apparatus 20. Next, the image display unit 302 displays the received training image as a new target image on the display device 506.

In step S37, the user refers to the target image displayed on the display device 506 and determines whether or not to continue the prediction of the contour line. If the prediction of the contour line is to be continued (YES), the user performs an operation for continuing the prediction of the contour line. The operation for continuing the prediction of the contour line is, for example, an operation for specifying a new target position with respect to the target image. If the user performs an operation for continuing the prediction of the contour line, the user terminal 30 returns the process to step S32.

On the other hand, if the prediction of the contour line is not to be continued (NO), the user terminal 30 advances the process to step S38. The case where the prediction of the contour line is not to be continued is a case where another operation different from the operation for specifying a new target position for the target image is performed. An example of the other operation is an operation for editing the contour line or an operation for storing a training image.

In step S38, the image display unit 302 of the user terminal 30 edits the contour line shown in the target image according to the operation for editing the contour line by the user. The editing of the contour line includes an operation for deleting excessive contour lines and an operation for adding insufficient contour lines. If the user does not perform the operation for editing the contour lines, step S38 may be omitted.

Following the operation for editing the contour lines, the prediction of the contour lines may be continued. If the prediction of the contour lines is to be continued, the user terminal 30 returns the process to step S32 when the operation for continuing the prediction of the contour lines is performed by the user.

In step S39, the user terminal 30 stores the target image displayed on the display device 506 as a training image in a storage unit such as the HDD 504 in response to the operation by the user for storing the training image.

### <Verification result>

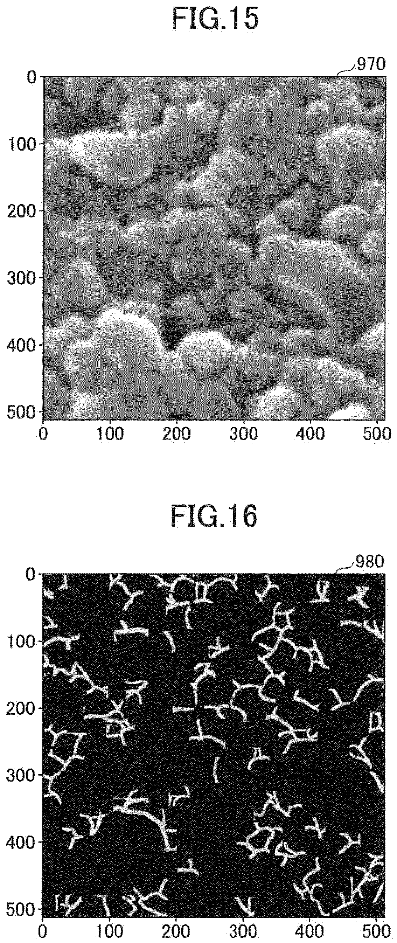

The result of verifying the prediction accuracy of the contour lines by using the prediction model according to the present embodiment will be described with reference to FIGS. 15 to 17.

FIG. 15 is a diagram illustrating an example of a verification image. As illustrated in FIG. 15, contour lines of complicated shapes are imaged in a verification image 970. In the verification image 970 illustrated in FIG. 15, a large number of target positions are drawn with luminance different from the luminance of each pixel of the verification image 970.

FIG. 16 is a diagram illustrating an example of a contour line image. The contour line image 980 illustrated in FIG. 16 is an image obtained by extracting contour lines near the target positions among the contour lines included in the verification image 970 illustrated in FIG. 15. In FIG. 16, a region corresponding to the contour lines is drawn with high luminance, and the other regions are drawn in black. That is, the contour line image 980 is an image showing an ideal prediction result for the verification image 970.

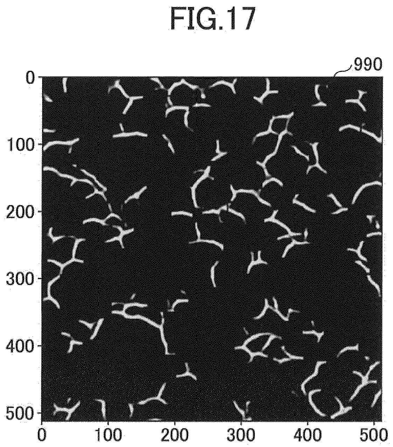

FIG. 17 is a diagram illustrating an example of a prediction result. A prediction result 990 illustrated in FIG. 17 is a prediction result output from the learned prediction model when the verification image 970 illustrated in FIG. 15 is input to the learned prediction model. In FIG. 17, a region corresponding to the contour line shown in the prediction result is drawn with high luminance, and the other regions are drawn in black. As illustrated in FIG. 17, in the prediction result 990, a contour line near the target position selected in the verification image 970 can be accurately predicted.

The verification results illustrated in FIGS. 15 to 17 indicate that by using the prediction model in the present embodiment, a training image showing a contour line desired by the user with high accuracy can be efficiently created.

### <Effect of the embodiment>

The image processing apparatus 20 in the present embodiment predicts a contour line near the target position in the target image based on a learned model that has learned the relationship between a position in the image and a contour line near the position. The user can draw a contour line only by the operation of specifying a desired position in the target image. Further, because a contour line at a position not specified by the user is not drawn, the user can select and draw a contour line corresponding to the analysis target. Therefore, according to the present embodiment, it is possible to efficiently create a training image used for machine learning.

The image processing apparatus 20 in the present embodiment may repeatedly execute the acquisition of the target image showing a new target position and the prediction of a contour line near the new target position. The user can select a necessary contour line while confirming the prediction result. Therefore, according to the present embodiment, it is possible to efficiently create a training image corresponding to an analysis target.

The model learning apparatus 10 in the present embodiment may generate learning data for learning a prediction model by extracting a part of the image from a previously created training image. The user can generate many pieces of learning data by preparing one training image. Therefore, according to the present embodiment, it is possible to learn a highly accurate prediction model with less labor and time.

The model learning apparatus 10 according to the present embodiment may select a learning position at random from the contour lines included in the learning image and extract the contour lines near the learning position from the ground truth image. The user does not need to specify a learning position when learning the prediction model. Therefore, according to the present embodiment, it is possible to generate learning data for learning the prediction model with fewer operations.

### [Note]

Each of the functions of the above-described embodiment can be implemented by one or more processing circuits. Here, the "processing circuit" in this specification includes a processor programmed to execute each function by software, such as a processor implemented by an electronic circuit, and devices such as ASICs (Application Specific Integrated Circuits), DSPs (Digital Signal Processors), FPGAs (Field Programmable Gate Arrays), and conventional circuit modules designed to execute each of the above-described functions.

While the embodiments of the present disclosure have been described in detail above, the embodiments disclosed herein are exemplary in all respects and not restrictive. The embodiments may be modified and improved in various ways without departing from the scope and spirit of the appended claims. The matters described in the above embodiments may have other configurations and may be combined in a consistent manner.

The present application claims priority to Japanese Patent Application No. 2023-66531, filed with the Japan Patent Office on April 14, 2023, the entire contents of which are incorporated herein by reference.

### REFERENCE SIGNS LIST

1 training image creation support system
10 model learning apparatus
100 image storage unit
101 learning data generating unit
102 model learning unit
20 image processing apparatus
200 model storage unit
201 image acquiring unit
202 contour line predicting unit
203 image output unit
30 user terminal
301 image input unit
302 image display unit
303 position specifying unit

## Claims

1. An image processing apparatus comprising:
an image acquiring unit configured to acquire a target image indicating a target position specified by a user;
a contour line predicting unit configured to predict a contour line near the target position based on a learned model that has learned a relationship between a position in an image and a contour line near the position; and
an image output unit configured to output a training image indicating a prediction result of the contour line near the target position.

2. The image processing apparatus according to claim 1, wherein the image processing apparatus repeatedly executes:
acquiring, by the image acquiring unit, the target image in which a new target position is indicated; and
predicting, by the contour line predicting unit, the contour line near the new target position.

3. The image processing apparatus according to claim 1 or 2, wherein the learned model has learned a relationship between a region indicating a predetermined luminance and the contour line near the region, based on learning data including a learning image in which the region is drawn and a ground truth image in which the contour line near the region included in the learning image is indicated.

4. The image processing apparatus according to claim 3, wherein the region is drawn at a position randomly selected from the contour line included in the learning image.

5. The image processing apparatus according to claim 3 or 4, wherein the learning data includes the learning image obtained by extracting a part of a basic image including a contour line, and the ground truth image obtained by extracting a part of a contour line image indicating the contour line included in the basic image.

6. An image processing method in which a computer executes:
a procedure for acquiring a target image indicating a target position specified by a user;
a procedure for predicting a contour line near the target position based on a learned model that has learned a relationship between a position in an image and a contour line near the position; and
a procedure for outputting a training image indicating a prediction result of the contour line near the target position.

7. A program that causes a computer to execute:
a procedure for acquiring a target image indicating a target position specified by a user;
a procedure for predicting a contour line near the target position based on a learned model that has learned a relationship between a position in an image and a contour line near the position; and
a procedure for outputting a training image indicating a prediction result of the contour line near the target position.
